(19) Europäisches Patentamt
European Patent Office
Office européen des brevets

(11) **EP 1 980 596 A1**

(12) **EUROPEAN PATENT APPLICATION**
published in accordance with Art. 158(3) EPC

(43) Date of publication:
**15.10.2008 Bulletin 2008/42**

(21) Application number: **07706661.1**

(22) Date of filing: **12.01.2007**

(51) Int Cl.:
***C09D 11/00*** *(2006.01)*

(86) International application number:
**PCT/JP2007/050319**

(87) International publication number:
**WO 2007/088719 (09.08.2007 Gazette 2007/32)**

(84) Designated Contracting States:
**DE FR GB**

(30) Priority: **31.01.2006 JP 2006021822**

(71) Applicant: **Tokai Senko K.K.**
**Kiyosu-shi**
**Aichi 452-0068 (JP)**

(72) Inventors:
• **MUTO, Mariko**
**Kiyosu-shi, Aichi 452-0068 (JP)**

• **YAMADA, Minoru**
**Kiyosu-shi, Aichi 452-0068 (JP)**

(74) Representative: **Keller, Günter et al**
**Lederer & Keller**
**Patentanwälte**
**Prinzregentenstrasse 16**
**80538 München (DE)**

(54) **MARKING INK**

(57)    In each of an organic solvent, an oil-soluble dye and an oil-soluble resin to be contained in an ink for marking, and a resin adopted in an article to be marked with the ink for marking, it is necessary that absolute values of differences between mutual solubility parameters are hot more than constant values, respectively.

EP 1 980 596 A1

**Description**

BACKGROUND OF THE INVENTION

Field of the invention

The present invention relates to an ink for marking which marks an outer surface of an article such as a covered electric wire, a connector for the covered electric wire or the like.

Description of the Prior Art

In this kind of the ink for marking, there has been, conventionally, disclosed an ink for marking an outer surface of a covered electric wire for discriminating the covered electric wire constituting a wire harness in an automatically marking method of articles described in Japanese Patent Early Publication No.2004-134371.
As this ink, there are exemplified an acryl-based paint, a dye-based ink, a pigment-based ink or a UV ink.
Meanwhile, the ink for marking is required to have the following performances, on actually manufacturing a wire harness industrially.
First, stability of the ink is required. The stability of the ink is required at a stage until the covered electric wire consisting a wire harness is marked. For instance, the stability of the ink is required when the ink for marking is manufactured, transported or stored, and when the ink for marking is coated on an outer surface of an article.
Secondly, ensuring well distinguishability after marking is required. For ensuring well the distinguishability, required are forming property of a film from resin components in the ink for marking, adhesiveness between the film and an outer surface of an article, or various fastnesses after marking.
In the ink described in the above-mentioned Japanese Early Patent Publication, however, nothing is described regarding the aforementioned performances. As the result, it leads to a drawback that the ink may not satisfy the aforementioned performances.
It is, therefore, an object of the present invention to provide an ink for marking which is used for marking an outer surface of an article having at least the outer surface formed of a resin, and which is excellent in stability thereof and distinguishability after marking.

SUMMARY OF THE INVENTION

To solve the aforementioned drawback, the present inventors have studied intensively and, as a result, have found out that the above-mentioned object may be attained on the basis of a ground that an organic solvent, an oil-soluble dye and an oil-soluble resin contained in an ink for marking have in a nature thereof a mutual constant relationship with a resin (hereinafter, referred to as "a resin for an article") forming an outer surface of the article which is marked with the ink for marking.
That is, the ink for marking in accordance with the present invention is an ink for marking which marks an outer surface of an article having at least the outer surface formed of a resin, wherein the ink for marking comprises an organic solvent, an oil-soluble dye and an oil-soluble resin, and wherein the following respective equations are satisfied:

$$|\delta_1 - \delta_2| \leqq 3.0 \ (J/cm^3)^{1/2} \cdot \cdot \cdot (1)$$

$$|\delta_1 - \delta_3| \leqq 3.0 \ (J/cm^3)^{1/2} \cdot \cdot \cdot (2)$$

$$|\delta_2 - \delta_3| \leqq 3.0 \ (J/cm^3)^{1/2} \cdot \cdot \cdot (3)$$

$$|\delta_3 - \delta_4| \leqq 5.0 \ (J/cm^3)^{1/2} \cdot \cdot \cdot (4),$$

when a solubility parameter of the organic solvent is denoted by $\delta_1$, a solubility parameter of the oil-soluble dye is denoted by $\delta_2$, a solubility parameter of the oil-soluble resin is denoted by $\delta_3$ and a solubility parameter of the resin for an article is denoted by $\delta_4$.
Herein, the equation (1) requires that an absolute value of a difference between solubility parameters is within a range of not more than 3.0 $(J/cm^3)^{1/2}$ in a relationship between the organic solvent and the oil-soluble dye. Thereby, the oil-soluble dye becomes in the state where it is well dissolved in the organic solvent.

And, the equation (2) requires that an absolute value of a difference between solubility parameters is within a range of not more than 3.0 $(J/cm^3)^{1/2}$ in a relationship between the organic solvent and the oil-soluble resin. Thereby, the oil-soluble resin becomes in the state where it is well dissolved in the organic solvent.

Therefore, by satisfying the aforementioned equation (1) and equation (2), may be well ensured, for instance, a stability of an ink for marking which is necessitated when the ink for marking is manufactured, transported or stored, and when the ink for marking is coated on an outer surface of an article.

Next, the equation (3) requires that an absolute value of a difference between solubility parameters is within a range of not more than 3.0 $(J/cm^3)^{1/2}$ in a relationship between the oil-soluble dye and the oil-soluble resin. Thereby, after formation of a film from the oil-soluble resin, the film formed from the oil-soluble resin is brought into the stably colored condition by means of the oil soluble dye.

Furthermore, the equation (4) requires that an absolute value of a difference between solubility parameters is within a range of not more than 5. 0 $(J/cm^3)^{1/2}$ in a relationship between the oil-soluble resin and the resin for an article. Thereby, the strong affinity state is maintained mutually between the oil-soluble resin and the resin for an article.

Therefore, by satisfying the aforementioned equation (3) and equation (4), may be improved film forming property of the oil-soluble resin, adhesiveness between the film and an outer surface of an article, or various fastnesses after marking, to thereby well ensure distinguishability after marking.

Thus, by satisfying all of the aforementioned equation (1), equation (2), equation (3) and equation (4), it is capable of providing an ink for marking which is used for marking an outer surface of an article, at least the outer surface of the article being formed of a resin, and which is excellent in stability and distinguishability after marking.

Herein, with this invention, the article refers to an entity of which at least an outer surface is formed of a resin. Specifically, as the article, exemplified is a covered electric wire, a wire harness (which is a bundle of a plurality of covered electric wires), or an associated article of a wire harness such as a connector, a tube, a tape, a cover, a clip or the like.

Further, with this invention, the resin for an article is a material which is a subject to be marked by the ink for marking. The resin for an article is not particularly limited, but is generally an organic polymeric compound, and includes a thermoplastic resin, a thermosetting resin and the like.

With this invention, the ink for marking is used for marking an outer surface of an article, and contains at least an organic solvent, an oil-soluble dye and an oil-soluble resin. The ink for marking contains in some cases a component such as a solubilizer for the oil-soluble dye, a crosslinking agent or a plasticizer for the oil-soluble resin.

The ink for marking in accordance with the present invention is used when it is coated on an outer surface of an article by a general method. Herein, the general method refers, for example, to discharge the ink for marking as an aerosol together with a pressurized gas, or to discharge the ink for marking with the liquid droplet condition. An example of this discharge is, concretely, discharge with an ultrafine amount discharging device such as discharge by an ink jet system, discharge with a microdispenser, or discharge with a so-called microvalve.

## DESCRIPTION OF THE PREFERRED EMBODIMENT

Hereinafter, an embodiment of an ink for marking in accordance with the present invention will be explained.

The ink for marking referred in this embodiment is an ink which is used when a covering member of a covered electric wire adopted as a member constituting a wire harness is marked at an outer surface thereof by an ink jet system.

The covered electric wire is constructed by means of covering a naked electric wire with a covering member. The covering member is manufactured by molding an electrically insulating resin (corresponding to a resin for an article) with the thermal plasticity by an extrusion method or the like. Examples of the electrically insulating resin include polyamide resin, polyester resin, polyvinyl chloride resin, polyolefin resin and the like. Particularly, the polyvinyl chloride resin has been conventionally used widely in an electrically insulating resin adopted as a covering member for a covered electric wire.

In recent years, polyolefin resin has been adopted in place of the conventional polyvinyl chloride resin, based on request of non-halogen in a covered electric wire adopted in a wire harness for an automobile. Particularly, marking is difficult in a covering member adopting the polyolefin resin, and the marking is not satisfied with the conventional ink for marking.

Herein, examples of the polyolefin resin include resins such as polyethylenes like low density polyethylene, medium density polyethylene, high density polyethylene or the like, and polypropylenes like homopolypropylene, block polypropylene, random polypropylene or the like.

In this embodiment, a discharge type of ink jet may be any of a drop-on-demand type and a continuous-flow-type. In case the continuous-flow-type is adopted, it is necessary to add to an ink a component imparting suitable electric conductivity. In this case, the component must be added in such a range that the present invention may not be influenced.

As the ink jet system, may be adopted, for example, any system such as a thermal ink jet system, a bubble jet system, a piezo system, an electrostatic actuator system or the like.

In this embodiment, drying of an ink for marking after discharged by an ink jet system may not be particularly limited. The drying may be done at an arbitrary temperature, for instance natural drying at a room temperature, or forced drying with a warm wind of a predetermined temperature, conduction, radiation or the like.

Further, in this embodiment, the ink for marking is an ink manufactured by dissolving oil-soluble dye and oil-soluble resin into organic solvent.

Herein, examples of the organic solvent are not limited to, but include alcohol-based solvents such as methyl alcohol, ethyl alcohol, isopropyl alcohol, butyl alcohol, benzyl alcohol and the like; polyhydric alcohol-based solvents such as ethylene glycol, glycerin and the like; ether-based solvents such as ethylene glycol monomethyl ether, ethylene glycol monoethyl ether, dioxane, tetrahydrofuran and the like; ester-based solvents such as ethyl acetate and the like; ketone-based solvents such as acetone, methyl ethyl ketone, methyl isobutyl ketone, cyclohexanone and the like; hydrocarbon-based solvents such as n-hexane, cyclohexane, benzene, toluene, mineral spirit and the like; and nitrile-based solvents such as acetonitrile and the like. In this embodiment, acetone or methyl ethyl ketone is particularly preferable among the aforementioned organic solvents.

Regarding these organic solvents, it is possible to adopt reference values as their solubility parameters.

Additionally, the organic solvent contained in the ink for marking may be used by mixing two or more kinds of organic solvents in a relationship to the oil-soluble dye and the oil-soluble resin therewith.

Particularly, in case the organic solvent contained in the ink for marking is used by mixing acetone or methyl ethyl ketone and other organic solvent therewith, it is preferable that the organic solvent after mixed, as previously described contains acetone or methyl ethyl ketone at 80% or more of a volume fraction thereof.

Next, examples of the oil-soluble dye are not limited to, but include C.I. Solvent Yellow 2, 13, 14, 16, 21, 25, 33, 56, 60, 88, 89, 93, 104, 105, 112, 113, 114, 157, 160, 163, C.I. Solvent Red 3, 18, 22, 23, 24, 27, 49, 52, 60, 111, 122, 125, 127, 130, 132, 135, 149, 150, 168, 179, 207, 214, 225, 233, C. I. Solvent Blue 7, 14, 25, 35, 36, 59, 63, 67, 68, 70,78, 87, 94, 95, 132, 136, 197, C. I. Solvent Black 3, 7, 28, 29, C. I. Solvent Violet 8, 13, 31, 33, 36, C. I. Solvent Orange 11, 55, 60, 63, 80, 99, 114, C. I. Solvent Brown 42, 43, 44, C. I. Solvent Green 3, 5, 20.

Besides, the oil-soluble dye may include disperse dye, pigment, vat dye, basic dye or the like which is possible to be adopted to the object of the present invention. The oil-soluble dye includes, for instance, C. I. Disperse Yellow 54, 82, 160, C.I. Disperse Red 22, 60, C.I. Disperse Blue 14, 197, C.I. Disperse Violet 13, 28, 31, 33, 57, C.I. Pigment Yellow 147, C.I. Pigment Red 181, C.I. Vat Red 41, C.I. Basic Blue 7 or the like. Further, it is capable of using a commercially available oil-soluble dye without a C.I. Number as the oil-soluble dye.

By measuring solubility parameters of these oil-soluble dyes, oil-soluble dye which may attain the object of the present invention may be easily selected in order to suit for an oil-soluble resin of the subject. Oil-soluble dye contained in the ink for marking may be used under appropriate blend in consideration with a hue of desired marking. In addition, an amount of the oil-soluble dye contained in the ink for marking to be used may be appropriately determined by color depth of marking.

Next, examples of the oil-soluble resin are not limited to, but include resin such as acryl resin, polyamide resin, polyester resin, unsaturated polyester resin, epoxy resin, phenol resin, urethane resin, polyvinyl chloride resin, polyvinyl acetate resin, polyethylene resin, polyimide resin, polycarbonate resin, ethylene vinyl acetate copolymer resin, ethylene vinyl chloride copolymer resin, polyimide resin, urea resin, ABS resin, AS resin, NBR, SBR, polyvinyl alcohol, polyvinyl ether or the like. Among them, the acryl resin is particularly preferable in this embodiment.

As the above-mentioned acryl resin, used is homopolymer of acrylic acid, acrylic acid ester (methyl ester, ethyl ester, hydroxyethyl ester, propyl ester etc.) or methacrylic acid ester (methyl ester, ethyl ester, hydroxyl ethyl ester, propyl ester etc.), or copolymer of two or more of them, or copolymer of them with other monomer. A molecular weight of each of these resins is selected appropriately on the basis of a viscosity of an ink and fastness of a film.

In this case, it is preferable that the ink for marking in accordance with the present invention has a viscosity within a range of 0.3 to 3.5 (mPa·s). Stability of the ink for marking which is discharged through an ink jet nozzle becomes better, in case the viscosity of the ink for marking is within the aforementioned range.

Herein, the viscosity of the ink for marking may be measured by a variety of methods. In the present invention, the viscosity has been measured by an oscillation method. For this measurement, a viscometer of SV-10 type manufactured by A & D Co. Ltd is exemplified as a viscosity measuring device.

By measuring a solubility parameter of the above-mentioned oil-soluble resin, an oil-soluble dye which may attain the object of the present invention may be easily selected in order to suit for an electrically insulating resin (corresponding to a resin for an article) of the subject.

And, an amount of the oil-soluble resin to be used in the ink for marking may be appropriately determined depending on fastness which is required based on a hue and a color depth of the ink for marking. Alternatively, a plurality of resins may be used by appropriately blending them.

As described above, for marking an outer surface of the covering member of the covered electric wire by using an ink jet system, in this embodiment, it is necessary first to ensure well stability of an ink and secondly to ensure well distinguishability after marking.

That is, the ink for marking in accordance with the present invention is characterized in that the following equations are satisfied:

$$|\delta 1 - \delta 2| \leqq 3.0 \ (J/cm^3)^{1/2} \cdots (5)$$

$$|\delta 1 - \delta 3| \leqq 3.0 \ (J/cm^3)^{1/2} \cdots (6)$$

$$|\delta 2 - \delta 3| \leqq 3.0 \ (J/cm^3)^{1/2} \cdots (7)$$

$$|\delta 3 - \delta 4| \leqq 5.0 \ (J/cm^3)^{1/2} \cdots (8),$$

when a solubility parameter of the organic solvent is denoted by $\delta 1$, a solubility parameter of the oil-soluble dye is denoted by $\delta 2$, a solubility parameter of the oil-soluble resin is denoted by $\delta 3$ and a solubility parameter of the resin for an article is denoted by $\delta 4$.

Herein, the solubility parameter is a value used when solubility of a nonelectrolyte against an organic solvent is assessed. The solubility parameter was, initially, proposed by Hildebrand and Scott and, thereafter, was developed by Hansen, and is widely used today. That is, it can be understood that substances having near values of the solubility parameters are compatible well, or have affinity.

The aforementioned each equation will be explained. First, in the equation (5), it is necessary that an absolute value of a difference between a value of the solubility parameter ($\delta 1$) of the organic solvent and a value of the solubility parameter ($\delta 2$) of the oil-soluble dye is within a range of not more than 3.0 $(J/cm^3)^{1/2}$, and is preferably within a range of not more than 2.0 $(J/cm^3)^{1/2}$.

Thereby, affinity between the organic solvent and the oil-soluble dye becomes strong, and the oil-soluble dye is brought into a state where it is well dissolved in an organic solvent.

Secondly, in the equation (6), it is necessary that an absolute value of a difference between a value of the solubility parameter ($\delta 1$) of the organic solvent and a value of the solubility parameter ($\delta 3$) of the oil-soluble resin is within a range of not more than 3. 0 $(J/cm^3)^{1/2}$, and is preferably within a range of not more than 2.0 $(J/cm^3)^{1/2}$.

Thereby, affinity between the organic solvent and the oil-soluble resin becomes strong, and the oil-soluble resin is brought into a state where it is well dissolved in an organic solvent.

Like this, by satisfying the equation (5) and the equation (6), dissolution of the oil-soluble dye and the oil-soluble resin at manufacturing of the ink for marking becomes easy, and a problem does not occur that the oil-soluble dye is precipitated by vibration and a temperature change when the ink for marking is transported or stored.

Further, a problem does not occur that the oil-soluble dye and the oil-soluble resin contained in the ink for marking are precipitated to clog a supply tube and an ink jet nozzle, due to a pressure change occurring when the ink for marking is supplied to the ink jet nozzle or discharged from the ink jet nozzle. Therefore, it is possible to provide the ink for marking which has well stability of the ink.

Subsequently, in the equation (7), it is necessary that an absolute value of a difference between a value of the solubility parameter ($\delta 2$) of the oil-soluble dye and a value of the solubility parameter ($\delta 3$) of the oil-soluble resin is within a range of not more than 3.0 $(J/cm^3)^{1/2}$, and is preferably within a range of not more than 2.0 $(J/cm^3)^{1/2}$.

Thereby, affinity between the oil-soluble dye and the oil-soluble resin becomes strong, and a film from the oil-soluble resin is brought into a stably colored state by means of the oil-soluble dye, after formation thereof.

Further, in the equation (8), it is necessary that an absolute value of a difference between a value of the solubility parameter ($\delta 3$) of the oil soluble resin and a value of the solubility parameter ($\delta 4$) of the electrically insulating resin (corresponding to the resin for the article, as previously described) is within a range of not more than 5.0 $(J/cm^3)^{1/2}$. It is preferably that the above solute value is in a range of not more than 4.0 $(J/cm^3)^{1/2}$, and is further preferably within a range of not more than 3.0 $(J/cm^3)^{1/2}$.

Thereby, affinity between the oil-soluble resin and the electrically insulating resin (corresponding to the resin for the article, as previously described) becomes strong and a film from the oil-soluble resin is brought into a state where it is stably marked on an outer surface of the electrically insulating resin (corresponding to the resin for the article, as previously described), after formation thereof.

Like this, by satisfying the equation (7) and the equation (8), it can be prevented to induce a problem of decoloration due to dissolution out of the oil-soluble dye from the film formed by the oil-soluble resin.

And, it can be also prevented to induce a problem that the film formed by the oil-soluble resin is peeled from a surface of the electrically insulating resin (corresponding to the resin for the article, as described above). Therefore, various fastnesses after marking are improved, and distinguishability after marking becomes well.

As previously described, the ink for marking which is used for marking an outer surface of a covering member of a covered electric wire becomes well in stability thereof and distinguishablity thereof after marking, by satisfying all of the equation (5), the equation (6), the equation(7) and the equation (8).

Next, a method will be explained for obtaining a solubility parameter of each of the organic solvent, the oil-soluble dye, the oil-soluble resin and the electrically insulating resin (corresponding to the resin for the article, as described above). In the present invention, there are many methods for obtaining the solubility parameter.

First, a value of the solubility parameter ($\delta 1$) of the organic solvent, which is fundamental, may be obtained by a reference value. For example, the value of the solubility parameter ($\delta 1$) may be obtained from the description of POLYMER HANDBOOK 4th Edition (J. Brandrup, E.H. Immergut, and E.A.Grulke, Editors).

Herein, in case two or more kinds of organic solvents are used by mixing thereof, a value of the solubility parameter ($\delta 1$) of the mixed organic solvent may be obtained by calculation based on solubility parameters of respective organic solvents to be mixed, and on a volume fraction of each of them. For example, the calculating method is given by "SP value Fundament/Application and Calculating Method", Hideki Yamamoto, Johokiko Co., Ltd. (2005).

Next, a value of the solubility parameter ($\delta 2$) of the oil-soluble dye is hardly published in reference values. Therefore, the value of the solubility parameter ($\delta 2$) is measured.

In this measurement, a method is used for obtaining a solubility parameter of the oil-soluble dye as a solute from each solubility parameter of solvents in a group with the highest solubility for the oil-soluble dye. This solubility parameter of the solvent with the highest solubility is obtained by performing a dissolution experiment with usage of various solvents having the known solubility parameters.

With this method, $\delta d$ (dispersion component), $\delta p$ (polar component) and $\delta h$ (hydrogen bonding component) which are respective components of solubility parameter (Hansen parameter) of respective solvents in a group with the highest solubility are plotted by separating into every component, and a central value is obtained for every component.

Using these central values respectively, a solubility parameter of the unknown substance may be obtained as a value of each component of a solubility parameter of a substance for which a solubility parameter is tried to be obtained. Details of this method are described, for example, in The Book and Paper Group ANNUAL Vol.3 (1984) "Solubility Parameters: Theory and Application".

A value of the solubility parameter ($\delta 3$) of the oil-soluble resin may not be obtained from reference values. This is the reason why commercially available products are used as the oil-soluble resin used in the present invention, as it is in many cases, and solubility parameters of almost of those commercially available resins are not published. And, commercially available products have copolymerization incorporations and molecular weights which are various depending on each company, and general values such as reference values can not be used.

Therefore, solubility parameters of these oil-soluble resins are obtained by measurement. In this case, there occurs often a scatter in values which is given by the method for obtaining solubility parameters from solubility obtained by the dissolution experiment, as described above.

In such a case, the solubility parameters are obtained by Turbidimetric Titration, as described below.

That is, a resin for which a solubility parameter is tried to be obtained is dissolved in a good solvent with the known solubility parameter. Then, a turbidimetric titration is performed using a poor solvent with a value of a solubility parameter greater than that of the good solvent. And another turbidimetric titration is performed using a poor solvent with a value of a solubility parameter smaller than that of the good solvent.

A value of a solubility parameter of the oil-soluble resin may be obtained by a calculation equation shown in the following reference. The calculation equation is given, for example, by K.W.SUH, D.H.CLARKE, JOURNAL OF POLYMER SCIENCE: PART A-1, Vol.5, 1671-1681(1967).

Next, a value of the solubility parameter ($\delta 4$) of the electrically insulating resin (corresponding to the resin for the article, as previously described) is measured by means of the aforementioned measuring method.

However, the aforementioned measuring method is difficult in some cases. That is, this is the case where an additive such as a plasticizer, a filler or the like is mixed in some cases when a covering member of a covered electric wire is formed, and a precise value may not be obtained by the aforementioned method.

In this case, a range has been grasped from reference values, and a representative value has been used. The value is described, for example, in the aforementioned POLYMER HANDBOOK 4th Edition (J.Brandrup, E.H.Immergut, andE.A.Grulke, Editors).

By the aforementioned method, a solubility parameter may be obtained for each of the organic solvent, the oil-soluble dye, the oil-soluble resin and the electrically insulating resin (corresponding to the resin for the article, as previously described).

By previously obtaining these solubility parameters in relation to individual components, each component of the ink for marking which is optimal thereto may be easily combined, in case the electrically insulating resin (corresponding to the resin for the article, as previously described) to be marked is determined.

Next, the present inventors have further found out that the object of the present invention may be attained better by the fact that a surface tension of the ink for marking is maintained at a value within a constant range, the ink for marking having the aforementioned relationship which is used, particularly, against a covering member of a covered electric wire using polyolefin resin.

That is, it is suitable that the ink for marking in accordance with the present invention has a surface tension within a range of 20 to 28 (mN/m).

It is required to make a contact angle smaller for easily wetting an outer surface of the covering member of the covered electric wire by means of the ink for marking. Thus, it is required that a value of a surface tension of the ink for marking is smaller than a value of a surface tension of the electrically insulating resin (corresponding to the resin for the article, as previously described).

Conversely, in case a value of a surface tension of the ink for marking is greater than a value of a surface tension of the electrically insulating resin (corresponding to a resin for an article), the contact angle is greater, the ink for marking becomes a liquid droplet on an outer surface of the covering member of the covered electric wire, and is not spread. As the result, clear marking may not be performed.

Herein, a surface tension of the polyolefin resin is generally given as a value within 29 to 31 (mN/m) according to the references.

In this case, in case the ink for marking has a surface tension within a range of 20 to 28 (mN/m), it may wet well an outer surface of the covering member of the covered electric wire adopting the polyolefin resin with which the conventional ink for marking may not perform marking sufficiently.

As the result, the ink for marking in accordance with the present invention can mark clearly an outer surface of the covering member of the covered electric wire adopting a polyolefin resin.

Herein, a surface tension of the ink for marking may be measured by various methods. In the present invention, the surface tension has been measured with a dynamic surface tension meter (principle: maximum foam pressure method). As a measuring device, Dyno Tester of SITA co. Ltd. is exemplified.

According to this embodiment, as previously described, can be provided an ink for marking which is used for marking an outer surface of a covering member of a covered electric wire and is excellent in stability and distingushability after marking.

In addition, an ink for marking which is excellent in stability and distingushability after marking under the aforementioned relationship can be provided against a covering member of a covered electric wire adopting a polyolefin resin with which a conventional ink for marking may not perform marking sufficiently.

Hereinafter, in this embodiment, following respective working examples and respective comparative examples have been prepared, and assessed. In addition, the present invention is not limited by these working examples at all.

Working example 1

Preparation of an ink for marking:

1 (g) of an oil-soluble dye (C.I. Solvent Blue 70) and 5(g) of an oil-soluble resin (Dianal BR-102, acryl resin manufactured by Mitsubishi Rayon Co., Ltd.) were sufficiently stirred and dissolved into 94 (g) of an acetone, and thereafter filtered by a 1. 0 ($\mu$m) membrane filter to obtain a blue ink for marking (ink-1).

Marking test:

Using a piezo-ink-jet system (nozzle diameter; 0.1 (mm)), the ink-1 was discharged on an outer surface of each covering member of a polyvinyl chloride resin-covered electric wire (outer diameter; 1.3(mm)), a polyethylene resin-covered electric wire (outer diameter; 1.3(mm)) and a polypropylene resin-covered electric wire (outer diameter; 1.3 (mm)), being followed by drying at a room temperature.

Solubility parameters:

In the ink-1, a solubility parameter ($\delta 1$) of an organic solvent (acetone) was 20.3 according to the reference value. A solubility parameter ($\delta 2$) of the oil-soluble dye (C.I. Solvent Blue 70) was 20.5 according to a dissolution experiment.

A solubility parameter ($\delta 3$) of the oil-soluble resin (Dianal BR-102) was 19.0 according to turbidimetric titration. In addition, both of the reference value and an actual measured value were used as a solubility parameter ($\delta 4$) of each of the polyvinyl chloride resin (hereinafter, referred to as "PVC"), the polyethylene resin (hereinafter, referred to as "PE") and the polypropylene resin (hereinafter, referred to as "PP") corresponding to a resin for an article.

A solubility parameter ($\delta$4) was 20.1 for PVC, 16.4 for PE or 19.2 for PP according to the reference value. On the other hand, the solubility parameter ($\delta$4) was 20.0 for PVC, 17.6 for PE or 17.5 for PP, when a resin for an article of each covered electric wire actually used in a marking test was subjected to turbidimetric titration.

Working example 2

Preparation of an ink for marking:

1 (g) of an oil-soluble dye (C.I. Solvent Blue 68) and 5 (g) of an oil-soluble resin (Dianal BR-113, acryl resin manufactured by Mitsubishi Rayon Co., Ltd.) were sufficiently stirred and dissolved in 94(g) of an acetone, and thereafter filtered by a 1.0$\mu$m membrane filter to obtain a blue ink for marking (ink-2).

Marking experiment:

The same test as that of the working example 1 was performed by using the ink-2.

Solubility parameters:

In the ink-2, a solubility parameter ($\delta$1) of an organic solvent (acetone) was 20.3 according to the reference value. A solubility parameter ($\delta$2) of the oil-soluble dye (C.I. Solvent Blue 68) was 20.7 according to a dissolution experiment.

A solubility parameter ($\delta$3) of the oil-soluble resin (Dianal BR-113) was 21.2 according to turbidimetric titration. Furthermore, a solubility parameter ($\delta$4) of the resin for an article was 20.1 for PVC, 16.4 for PE or 19.2 for PP according to the reference value. On the other hand, the solubility parameter ($\delta$4) was 20.1 for PVC, 17.6 for PE or 17.5 for PP according to turbidimetric titration.

Working example 3

Preparation of an ink for marking:

1(g) of an oil-soluble dye (C.I. Solvent Yellow 56) and 5(g) of an oil-soluble resin (polyvinyl acetate, extra pure reagent manufactured by Yoneyama Yakuhin Kogyo Co., Ltd.) were sufficiently stirred and dissolved in 94 (g) of an acetone, and thereafter filtered by a 1.0$\mu$m membrane filter to obtain an yellow ink for marking (ink-3).

Marking test:

The same test as that of the working example 1 was performed by using the ink-3.

Solubility parameters:

In the ink-3, a solubility parameter ($\delta$1) of the organic solvent (acetone) was 20.3 according to the reference value. A solubility parameter ($\delta$2) of the oil-soluble dye (C.I. Solvent Yellow 56) was 20.5 according to a dissolution experiment.

A solubility parameter ($\delta$3) of the oil-soluble resin (polyvinyl acetate) was 19.4 according to the reference value. Furthermore, a solubility parameter ($\delta$4) of the resin for an article was 20.1 for PVC, 16.4 for PE or 19.2 for PP according to each reference value. On the other hand, the solubility parameter ($\delta$4) was 20.0 for PVC, 17.6 for PE or 17.5 for PP according to turbidimetric titration.

Working example 4

Preparation of an ink for marking:

1(g) of an oil-soluble dye (C.I. Solvent Red 233) and 5 (g) of an oil-soluble resin (Dianal BR-102, acryl resin manufactured by Mitsubishi Rayon Co., Ltd.) were sufficiently stirred and dissolved in 94(g) of a methyl ethyl ketone, and thereafter filtered by using a 1.0$\mu$m membrane filter to obtain a red ink for marking (ink-4).

Marking test:

The ink-4 was discharged on an outer surface of each covering member as in working example 1, and was dried with the hot air at 40°C.

Solubility parameters:

In the ink-4, a solubility parameter ($\delta1$) of the organic solvent (methyl ethyl ketone) was 19.0 according to the reference value. A solubility parameter ($\delta2$) of the oil-soluble dye (C.I. Solvent Red 233) was 19.0 according to a dissolution experiment.

A solubility parameter ($\delta3$) of the oil-soluble resin (Dianal BR-102) was 19.0 according to turbidimetric titration. Furthermore, a solubility parameter ($\delta4$) of the resin for an article were 20.1 for PVC, 16.4 for PE or 19.2 for PP according to the reference value. On the other hand, the solubility parameter ($\delta3$) was 20.0 for PVC, 17.6 for PE or 17.5 for PP according to turbidimetric titration.

Working example 5

Preparation of an ink for marking:

1 (g) of an oil-soluble dye (C.I. Solvent Blue 70) and 5 (g) of an oil-soluble resin (Dianal BR-113, acryl resin manufactured by Mitsubishi Rayon Co., Ltd.) were sufficiently stirred and dissolved in 94 (g) of an acetone, and thereafter filtered by using a 1.0$\mu$m membrane filter to obtain a blue ink for marking (ink-5).

Marking test:

The same test as that of working example 4 was performed by using the ink-5.

Solubility parameters:

In the ink-5, a solubility parameter ($\delta1$) of the organic solvent (acetone) was 20.3 according to the reference value. A solubility parameter ($\delta2$) of the oil-soluble dye (C.I. Solvent Blue 70) was 20.5 according to a dissolution experiment.

A solubility parameter ($\delta3$) of the oil-soluble resin (Dianal BR-113) was 21.2 according to turbidimetric titration. Furthermore, a solubility parameter ($\delta4$) of the resin for an article was 20.1 for PVC, 16.4 for PE or 19.2 for PP according to the reference value. On the other hand, the solubility parameter ($\delta4$) was 20.0 for PVC, 17.6 for PE or 17.5 for PP according to turbidimetric titration.

Working example 6

Preparation of an ink for marking:

1(g) of an oil-soluble dye (C.I. Solvent Violet 33) and 5(g) of an oil-soluble resin (Dianal BR-102, acryl resin manufactured by Mitsubishi Rayon Co., Ltd.) were sufficiently stirred and dissolved in 94(g) of a methyl ethyl ketone, and thereafter filtered by using a 1.0$\mu$m membrane filter to obtain a violet ink for marking (ink-6).

Marking test:

The same test as that of working example 4 was performed by using the Ink-6.

Solubility parameters:

In the ink-6, a solubility parameter ($\delta1$) of the organic solvent (methyl ethyl ketone) was 19.0 according to the reference value. A solubility parameter ($\delta2$) of the oil-soluble dye (C.I. Solvent Violet 33) was 20.1 according to a dissolution experiment.

A solubility parameter ($\delta3$) of the oil-soluble resin (Dianal BR-102) was 19.0 according to turbidimetric titration. Furthermore, a solubility parameter ($\delta4$) of the resin for an article was 20.1 for PVC, 16.4 for PE or 19.2 for PP according to the reference value. On the other hand, the solubility parameter ($\delta3$) was 20.0 for PVC, 17.6 for PE or 17.5 for PP according to turbidimetric titration.

Working example 7

Preparation of an ink for marking:

1(g) of an oil-soluble dye (C.I. Solvent Blue 70) and 5 (g) of an oil-soluble resin (Dianal BR-102, acryl resin manufactured by Mitsubishi Rayon Co., Ltd.) were sufficiently stirred and dissolved in 94(g) of a methyl ethyl ketone, and thereafter filtered by using a 1.0μm membrane filter to obtain a blue ink for marking (ink-7).

Marking test:

The same test as that of working example 4 was performed by using the ink-7.

Solubility parameters:

In the ink-7, a solubility parameter ($\delta1$) of the organic solvent (methyl ethyl ketone) was 19.0 according to the reference value. A solubility parameter ($\delta2$) of the oil-soluble dye (C.I. Solvent Blue 70) was 20.5 according to a dissolution experiment.
A solubility parameter ($\delta3$) of the oil-soluble resin (Dianal BR-102) was 19.0 according to turbidimetric titration. Furthermore, a solubility parameter ($\delta4$) of the resin for an article was 20.1 for PVC, 16.4 for PE or 19.2 for PP according to the reference value. On the other hand, the solubility parameter ($\delta3$) was 20.0 for PVC, 17.6 for PE or 17.5 for PP according to turbidimetric titration.

Comparative example 1

Preparation of an ink for marking:

1(g) of an oil-soluble dye (C.I. Solvent Yellow 88) and 5(g) of an oil-soluble resin (Dianal BR-106, acryl resin manufactured by Mitsubishi Rayon Co., Ltd.) were sufficiently stirred in 94(g) of a cyclohexane to obtain a yellow ink for marking (ink-8).
However, the ink-8 was deficient in dissolution stability, and could not be filtered by using a 1.0μm membrane filter.

Marking test:

A polyvinyl chloride resin-covered electric wire (outer diameter; 1. 3mm) was tried to be tested as in the working example 1 by using the ink-8. However, the ink-8 was deficient in dissolution stability as described above. Therefore, a marking test was not performed.

Solubility parameters:

In the ink-8, a solubility parameter ($\delta1$) of an organic solvent (cyclohexane) was 16.8 according to the reference value. A solubility parameter ($\delta2$) of the oil-soluble dye (C.I. Solvent Yellow 88) was 23.1 according to a dissolution experiment.
A solubility parameter ($\delta3$) of the oil-soluble resin (Dianal BR-106) was 20.9 according to turbidimetric titration. Furthermore, a solubility parameter ($\delta4$) of the resin for an article (PVC) was 20.1 according to the reference value. On the other hand, the solubility parameter ($\delta3$) was 20.0 according to turbidimetric titration.

Comparative example 2

Preparation of an ink for marking:

1(g) of an oil-soluble dye (C.I. Solvent Red 233) and 5 (g) of an oil-soluble resin (Dianal BR-87, acryl resin manufactured by Mitsubishi Rayon Co., Ltd.) were sufficiently stirred in 94 (g) of a cyclohexane to obtain a red ink for marking (ink-9).
However, the ink-9 was deficient in dissolution stability, and could not be filtered by using a 1.0μm membrane filter.

Marking test:

A polyethylene resin-covered electric wire (outer diameter; 1. 3mm) was tried to be tested as in the working example 1 by using the ink-9. However, the ink-9 was deficient in dissolution stability as described above. Therefore, a marking test was not performed.

Solubility parameters:

In the ink-9, a solubility parameter ($\delta 1$) of an organic solvent (cyclohexane) was 16.8 according to the reference value. A solubility parameter ($\delta 2$) of the oil-soluble dye (C.I. Solvent Red 233) was 19.0 according to a dissolution experiment.

A solubility parameter ($\delta 3$) of the oil-soluble resin (Dianal BR-87) was 21.0 according to turbidimetric titration. Furthermore, a solubility parameter ($\delta 4$) of the resin for an article (PE) was 16.4 according to the reference value. On the other hand, the solubility parameter ($\delta 3$) was 17.6 according to turbidimetric titration.

Comparative example 3

Preparation of a marking ink:

1(g) of an oil-soluble dye (C.I. Solvent Yellow 88) and 5g of an oil-soluble resin (Dianal BR-102, acryl resin manufactured by Mitsubishi Rayon Co., Ltd.) were sufficiently stirred and dissolved in 94(g) of a cyclohexanone, and thereafter filtered by using a $1.0\mu m$ membrane filter to obtain an yellow ink for marking (ink-10).

Marking test:

A polypropylene resin-covered electric wire (outer diameter; 1.3mm) was subjected to the same test as that of the working example 1 by using the ink-10.

Solubility parameters:

In the ink-10, a solubility parameter ($\delta 1$) of an organic solvent (cyclohexanone).was 21.3 according to the reference value. A solubility parameter ($\delta 2$) of the oil-soluble dye (C.I. Solvent Yellow 88) was 23.1 according to a dissolution experiment.

A solubility parameter ($\delta 3$) of the oil-soluble resin (Dianal BR-102) was 19.0 according to turbidimetric titration. Furthermore, a solubility parameter ($\delta 4$) of the resin for an article (PP) was 19.2 according to the reference value. On the other hand, the solubility parameter ($\delta 3$) was 17.5 according to turbidimetric titration.

Herein, Table 1 shows absolute values of a difference between solubility parameters of respective components of the inks for marking (the ink-1 to the ink-10) and of respective resins for an article (PVC, PE and PP) of the respective working and comparative examples. Additionally, the Table 1 shows values of a surface tension of each ink for marking.

(Table 1):

| | | absolute value of difference in solubility parameters | | | | | |
| --- | --- | --- | --- | --- | --- | --- | --- |
| | | | | | $|\delta 3\text{-}\delta 4|$ | | |
| | resin for article | $|\delta 1\text{-}\delta 2|$ | $|\delta 1\text{-}\delta 3|$ | $|\delta 2\text{-}\delta 3|$ | $\delta 4$ from reference value | $\delta 4$ from actually measured | surface tension (mN/m) |
| working example 1 | PVC | 0.2 | 1.3 | 1.5 | 1.1 | 1.0 | 23.0 |
| | PE | 0.2 | 1.3 | 1.5 | 2.6 | 1.3 | 23.0 |
| | PP | 0.2 | 1.3 | 1.5 | 0.2 | 1.5 | 23.0 |
| working example 2 | PVC | 0.4 | 0.9 | 0.5 | 1.1 | 1.2 | 21.4 |
| | PE | 0.4 | 0.9 | 0.5 | 4.8 | 3.6 | 21.4 |
| | PP | 0.4 | 0.9 | 0.5 | 2.0 | 3.7 | 21.4 |

(continued)

| | | absolute value of difference in solubility parameters | | | | | |
| | | | | | |δ3-δ4| | | surface tension (mN/m) |
| | resin for article | \|δ1-δ2\| | \|δ1-δ3\| | \|δ2-δ3\| | δ4 from reference value | δ4 from actually measured | |
|---|---|---|---|---|---|---|---|
| working example 3 | PVC | 0.2 | 0.9 | 1.1 | 0.7 | 0.6 | 21.9 |
| | PE | 0.2 | 0.9 | 1.1 | 3.0 | 1.8 | 21.9 |
| | PP | 0.2 | 0.9 | 1.1 | 0.2 | 1.9 | 21.9 |
| working example 4 | PVC | 0 | 0 | 0 | 1.1 | 1.0 | 23.9 |
| | PE | 0 | 0 | 0 | 2.6 | 1.4 | 23.9 |
| | PP | 0 | 0 | 0 | 0.2 | 1.5 | 23.9 |
| working example 5 | PVC | 0.2 | 0.9 | 0.7 | 1.1 | 1.2 | 21.4 |
| | PE | 0.2 | 0.9 | 0.7 | 4.8 | 3.6 | 21.4 |
| | PP | 0.2 | 0.9 | 0.7 | 2.0 | 3.7 | 21.4 |
| working example 6 | PVC | 1.1 | 0 | 1.1 | 1.1 | 1.0 | 23.9 |
| | PE | 1.1 | 0 | 1.1 | 2.6 | 1.4 | 23.9 |
| | PP | 1.1 | 0 | 1.1 | 0.2 | 1.5 | 23.9 |
| working example 7 | PVC | 1.5 | 0 | 1.5 | 1.1 | 1.0 | 23.9 |
| | PE | 1.5 | 0 | 1.5 | 2.6 | 1.4 | 23.9 |
| | PP | 1.5 | 0 | 1.5 | 0.2 | 1.5 | 23.9 |
| comparative example 1 | PVC | 6.3 | 4.1 | 2.2 | 0.8 | 0.9 | 22.0 |
| comparative example 2 | PE | 2.2 | 4.2 | 2.0 | 4.6 | 3.4 | 22.0 |
| comparative example 3 | PP | 1.8 | 2.3 | 4.2 | 0.2 | 1.5 | 30.0 |

According to this Table 1, it is understood that all of the inks for marking of the working examples 1 to 7 (the ink-1 to the ink-7) satisfy conditions of the present invention.

To the contrary, inks for marking of the comparative examples 1 to 3 (the ink-8 to the ink-10) do not satisfy all of the conditions of the present invention. Particularly, with the ink-8, each value of $|\delta1-\delta2|$ and $|\delta1-\delta3|$ is greater than $3.0(J/cm^3)^{1/2}$. Similarly, with the ink-9, a value of $|\delta1-\delta3|$ is greater than $3.0(J/cm^3)^{1/2}$. On the other hand, with the ink-10, a value of $|\delta2-\delta3|$ is greater than $3.0(J/cm^3)^{1/2}$.

In addition, there occurs often a slight difference between a value of $|\delta3-\delta4|$ wherein the reference value is used as a value of δ4 and a value of $|\delta3-\delta4|$ wherein an actually measured value is used as a value of δ4. However, under the above-mentioned slight difference, the conditions of the present invention are satisfied.

Next, inks for marking of the working examples were assessed for their performance. With this assessment, stability of an ink for marking was assessed based on the state of the ink, and distinguishability after marking was assessed based on the state of a covered electric wire after marking.

For these assessments, filter permeability and temperature stability were adopted as assessment items to stability of the ink. And, clearness and adhesiveness of marking were adopted as assessment items to distinguishability after marking. These four assessment items were respectively assessed at three stages of "G" indicative of "GOOD", "F" indicative of "FAIR" and "P" indicative of "POOR". And, having four "G" or three "G" and one "F" among four assessment items, the ink for marking was passed. That is to say, having two or more "F" or one or more "P" among four assessment items, the ink for marking was failure.

The filter permeability was assessed by a permeation resistance and an amount of the residue remaining on the filter when permeated through a 0.45μm membrane filter (OMNIPORE MEMBRANEFILTERS 0.45 μm JM manu-

factured by Millipore Corporation). Assessment was performed by three stages of "G" indicative of "GOOD" and corresponding to no problem, "F" indicative of "FAIR" and corresponding to presence of a permeation resistance but no residue, and "P" indicative of "POOR" and corresponding to a great permeation resistance, much residue, and not filterable.

For assessing the above-mentioned temperature stability, the inks for marking were stood for 7 days at 0°C and for 2 months at 50°C, respectively. Thereafter, the above-mentioned temperature stability was assessed by presence or absence of precipitates and a change in a viscosity of the precipitates. Assessment was performed by three stages of "G" indicative of "GOOD" and corresponding to no change, "F" indicative of "FAIR" and corresponding to observation of slight change, but usable, and "P" indicative of "POOR" and corresponding to presence of change and not usable.

The clearness of marking was assessed visually regarding a covered electric wire after marking with ink jet system. Assessment was performed by three stages of "G" indicative of "GOOD" and corresponding to good distinguishment of a mark, "F" indicative of "FAIR" corresponding to difficulty to distinguish a mark, and "P" indicative of "POOR" and corresponding to impossibility to distinguish a mark.

The adhesiveness was assessed by a cellophane tape method. Assessment by the cellophane tape method was performed by sticking a cellophane tape to a marking surface of a covered electric wire, and thereafter peeling the stuck cellophane tape.

The assessment was performed by three stages of "G" indicative of "GOOD" and corresponding to no transference onto a cellophane tape, "F" indicative of "FAIR" and corresponding to the presence of transference, but possibility to distinguish a mark, and "P" indicative of "POOR" and corresponding to peeling of a mark, and impossibility to distinguish a mark.

Table 2 shows results of the above-mentioned each assessment on each resin for an article (PVC, PE and PP) in relation to the inks (the ink-1 to the ink-10) for marking of the respective working and comparative examples.

(Table 2):

| | resin for article | stability of ink | | distinguishability after marking | |
|---|---|---|---|---|---|
| | | filter permeability | temperature stability | clearness | adhesiveness |
| working example 1 | PVC | F | G | G | G |
| | PE | F | G | G | G |
| | PP | F | G | G | G |
| working example 2 | PVC | G | G | G | G |
| | PE | G | G | G | F |
| | PP | G | G | G | G |
| working example 3 | PVC | G | G | G | G |
| | PE | G | G | G | G |
| | PP | G | G | G | G |
| working example 4 | PVC | F | G | G | G |
| | PE | F | G | G | G |
| | PP | F | G | G | G |
| working example 5 | PVC | G | G | G | G |
| | PE | G | G | G | F |
| | PP | G | G | G | G |
| working example 6 | PVC | F | G | G | G |
| | PE | F | G | G | G |
| | PP | F | G | G | G |
| working example 7 | PVC | F | G | G | G |
| | PE | F | G | G | G |
| | PP | F | G | G | G |

(continued)

|  | resin for article | stability of ink | | distinguishability after marking | |
|---|---|---|---|---|---|
|  |  | filter permeability | temperature stability | clearness | adhesiveness |
| comparative example 1 | PVC | P | - | - | - |
| comparative example 2 | PE | P | - | - | - |
| comparative example 3 | PP | G | G | G | P |

According to this Table 2, it is understood that all of inks for marking of the working examples 1 to 7 (the ink-1 to the ink-7) are excellent in filter permeability and temperature stability as stability of an ink, and clearness and adhesiveness of marking as distinguishability after marking.

To the contrary, inks for marking of the comparative examples 1 to 3 (the ink-8 to the ink-10) have "P" in any of assessments, and are not passed.

Herein, the ink-8 and the ink-9 could not be filtered by using a 1.0$\mu$m membrane filter at preparation of the ink for marking. Thus, in the Table 2, filter permeability was assessed to be "P", and other assessment was not performed.

On the other hand, the ink-10 was well in filter permeability and temperature stability as stability of an ink. However, the ink-10 was bad in adhesiveness of marking as distinguishability after marking, and induced peeling.

Herein, in the Table 1, the ink-10 satisfies the conditions of the present invention in a value of $|\delta 3-\delta 4|$ which is thought to be involved with adhesiveness.

However, a value of $|\delta 2-\delta 3|$ which is thought to be involved with compatibility between the oil-soluble dye and the oil-soluble resin is greater than $3.0(J/cm^3)^{1/2}$. Therefore, it is thought that an oil-soluble resin containing an oil-soluble dye deteriorates adhesiveness with PP which is a resin for an article.

In addition, upon embodying the present invention, there are following various modifications in addition to the aforementioned embodiment.

(1) The present invention may be used for marking of articles such as a connector, a tube, a tape, a cover, a clip and the like in addition to a covered electric wire adopted as a wire harness constituting member.
(2) The present invention may be adopted in a wire harness for buildings or houses in addition to a wire harness for an automobile.
(3) The ink for marking in accordance with the present invention may be used also in various impartation methods such as coating with a roller, and dipping impartation by a dipping manner.

**Claims**

1. An ink for marking which marks an outer surface of an article having at least the outer surface formed of a resin, wherein said ink for marking comprises an organic solvent, an oil-soluble dye and an oil-soluble resin, and wherein the following respective equations are satisfied:

$$|\delta 1-\delta 2| \leqq 3.0 \ (J/cm^3)^{1/2}$$

$$|\delta 1-\delta 3| \leqq 3.0 \ (J/cm^3)^{1/2}$$

$$|\delta 2-\delta 3| \leqq 3.0 \ (J/cm^3)^{1/2}$$

$$|\delta 3-\delta 4| \leqq 5.0 \ (J/cm^3)^{1/2},$$

when a solubility parameter of the organic solvent is denoted by $\delta 1$, a solubility parameter of the oil-soluble dye is denoted by $\delta 2$, a solubility parameter of the oil-soluble resin is denoted by $\delta 3$ and a solubility parameter of the resin for an article is denoted by δ4.

2. An ink for marking according to claim 1, wherein said ink for marking has a value of a surface tension within a range of 20 to 28 (mN/m).

3. An ink for marking according to claim 1 or 2, wherein said organic solvent contains acetone or methyl ethyl ketone at 80% or more of a volume fraction thereof.

## INTERNATIONAL SEARCH REPORT

| International application No. |
|---|
| PCT/JP2007/050319 |

| A. CLASSIFICATION OF SUBJECT MATTER |
|---|
| *C09D11/00(2006.01)i* |

According to International Patent Classification (IPC) or to both national classification and IPC

| B. FIELDS SEARCHED |
|---|
| Minimum documentation searched (classification system followed by classification symbols)<br>*C09D11/00-11/20* |

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
WPIDS(STN)

C. DOCUMENTS CONSIDERED TO BE RELEVANT

| Category* | Citation of document, with indication, where appropriate, of the relevant passages | Relevant to claim No. |
|---|---|---|
| A | JP 2003-221533 A  (Konica Corp.),<br>08 August, 2003 (08.08.03),<br>Claims<br>& EP 1333063 A2       & US 2003/0149131 A1 | 1-3 |
| A | JP 2004-35863 A  (Fuji Xerox Co., Ltd.),<br>05 February, 2004 (05.02.04),<br>Claims<br>(Family: none) | 1-3 |
| A | JP 2002-121484 A  (Martec Corp.),<br>23 April, 2002 (23.04.02),<br>Claims; examples<br>(Family: none) | 1-3 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 March, 2007 (29.03.07) | 17 April, 2007 (17.04.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

| **INTERNATIONAL SEARCH REPORT** | International application No. |
|---|---|
| | PCT/JP2007/050319 |

\<Concerning the subject of search>

Claims 1-3 include extremely many marking inks specified by the desired property of satisfying the relationships:

$$|\delta_1 - \delta_2| \leq 3.0 \ (J/cm^3)^{1/2}$$
$$|\delta_1 - \delta_3| \leq 3.0 \ (J/cm^3)^{1/2}$$
$$|\delta_2 - \delta_3| \leq 3.0 \ (J/cm^3)^{1/2}$$
$$|\delta_3 - \delta_4| \leq 5.0 \ (J/cm^3)^{1/2}$$

wherein $\delta_1$ is the solubility parameter of the organic solvent, $\delta_2$ is the solubility parameter of the oil-soluble dye, $\delta_3$ is the solubility parameter of the oil-soluble resin, and $\delta_4$ is the solubility parameter of the resin constituting the outer surface of the article. Thus, claims 1-3 include all marking inks having the property. However, few of the claimed marking inks are disclosed in the description within the meaning of PCT Article 5, so that the inventions of claims 1-3 are inadequately supported within the meaning of PCT Article 6.

Further, the scope of marking inks having the property of satisfying the relationships:

$$|\delta_1 - \delta_2| \leq 3.0 \ (J/cm^3)^{1/2}$$
$$|\delta_1 - \delta_3| \leq 3.0 \ (J/cm^3)^{1/2}$$
$$|\delta_2 - \delta_3| \leq 3.0 \ (J/cm^3)^{1/2}$$
$$|\delta_3 - \delta_4| \leq 5.0 \ (J/cm^3)^{1/2}$$

(wherein $\delta_1$ is the solubility parameter of the organic solvent, $\delta_2$ is the solubility parameter of the oil-soluble dye, $\delta_3$ is the solubility parameter of the oil-soluble resin, and $\delta_4$ is the solubility parameter of the resin constituting the outer surface of the article) cannot be specified even in view of the common general technical knowledge at the time of filing, as understood from the descriptions "Since most of the solubility parameters ($\delta_2$) of oil-soluble dyes are not published in literature, they must be measured" (paragraph [0057]) and "The solubility parameters ($\delta_3$) of oil-soluble resins cannot be determined from literature values. Although commercially available oil-soluble resins as such are used in the present invention in many cases, most of the solubility parameters of the commercially available ones are not published. Further, since oil-soluble resins have various monomer compositions and molecular weights dependent on the makers, general parameter values given in literature cannot be used in the invention" (paragraph [0059]). Thus, claims 1-3 do not satisfy the requirement of clarity as provided for in PCT Article 6.

Consequently, this search has been made on marking inks disclosed in the description specifically.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004134371 A

**Non-patent literature cited in the description**

- Solubility Parameters: Theory and Application. The Book and Paper Group ANNUAL. 1984, vol. 3
- **K.W.SUH ; D.H.CLARKE.** *JOURNAL OF POLYMER SCIENCE: PART A-1,* 1967, vol. 5, 1671-1681
- POLYMER HANDBOOK